## Europäisches Patentamt

## European Patent Office

## Office européen des brevets

(19)

(11) Veröffentlichungsnummer: **0 129 007**

**A1**

(12)

# EUROPÄISCHE PATENTANMELDUNG

(21) Anmeldenummer: **84103660.1**

(22) Anmeldetag: **03.04.84**

(51) Int. Cl.³: **A 01 D 43/10**

(30) Priorität: **08.06.83 DE 3320717**

(43) Veröffentlichungstag der Anmeldung:
**27.12.84 Patentblatt 84/52**

(84) Benannte Vertragsstaaten:
**AT CH FR GB IT LI NL**

(71) Anmelder: **Klöckner-Humboldt-Deutz AG**
**Zweigniederlassung Fahr**

**D-7702 Gottmadingen(DE)**

(72) Erfinder: **Johler, Franz**
**Hoackerstrasse 18**
**D-7702 Gottmadingen 2(DE)**

(74) Vertreter: **Haft, Berngruber, Czybulka**
**Hans-Sachs-Strasse 5**
**D-8000 München 5(DE)**

(54) **Futteraufbereitungsmaschine.**

(57) Die Futteraufbereitungsmaschine weist ein fahrbares Gestell (1) auf, eine Aufnahmeeinrichtung für das geschnittene Futter (2) und einen Futterdurchlaß sowie zwei Aufbereitungsrotoren (3, 4), die drehbar und parallel zueinander um sich quer zur Fahrtrichtung erstreckende Achsen (5, 6) angeordnet sind und die hierbei mit einer Vielzahl von radial nach außen gerichteten Aufbereitungsschlegeln (7, 8) versehen sind, wobei vor dem unteren Aufbereitungsrotor (3) ein in einer Ebene senkrecht zu den Achsen der beiden Aufbereitungsrotoren verschwenkbares Leit- und Prallblech (9) angeordnet ist, das in Richtung des unteren Aufbereitungsrotors gewölbt ist.

Fig.1

Croydon Printing Company Ltd

EP 0 129 007 A1

Die vorliegende Erfindung betrifft eine Futteraufbereitungsmaschine , die ein fahrbares Gestell aufweist mit einer Aufnahmeeinrichtung für das geschnittene Futter und einem Futterdurchlaß sowie mit zwei Aufbereitungsrotoren, die drehbar und parallel zueinander um sich quer zur Fahrtrichtung der Maschine erstreckenden Achsen angeordnet sind und die jeweils mit einer Vielzahl von radial nach außen gerichteten, elastischen oder elastisch befestigten Aufbereitungsschlegeln versehen sind.

Grünfutter, wie z.B. Wiesengras, muß nach dem Schneiden aufbereitet werden, um die Trocknungsdauer z.B. zur Gewinnung von Silage oder Heu zu verkürzen. Insbesondere im europäischen Klima ist eine derartige Verkürzung der Trocknungsdauer erforderlich, da der schädliche Einfluß von Licht, Regen oder auch Mikroorganismen eine Verschlechterung der Futterqualität bewirken kann. Um die Trocknungsdauer verkürzen zu können, muß die verdunstungshemmende Wachsschicht an Halm und Stengel aufgeschlossen werden und es ist allgemein üblich, mittels Futteraufbereitungsmaschinen das Grünfutter mechanisch derart zu behandeln, daß z.B. durch Knicken des Grünfutters mittels der Aufbereitungsrotoren diese Wachsschicht aufgeschlossen wird. Unterschiedliches Grünfutter erfordert dazu unterschiedliche Aufbereitungsgrade und demzufolge unterschiedliche oder anpassungsfähige Futteraufbereitungsmaschinen, mit denen zu starkes Beschädigen des Grünfutters, wie z.B. Zerquetschen, mit Sicherheit vermieden werden.

Aus der veröffentlichten europäischen Patentanmeldung
Nr. 61 230 ist eine Aufbereitungsmaschine für Grünfutter bekannt, die ein fahrbares Gestell aufweist sowie
eine Aufnahmeeinrichtung für das geschnittene Erntegut,
das einem Durchlaß für das Futter zugeführt wird , wonach
es zwei Aufbereitungsrotoren durchläuft, die drehbar und
parallel zueinander  um sich quer zur Fahrtrichtung der
Maschine erstreckende Achsen angeordnet sind und die jeweils mit einer Vielzahl von radial nach außen gerichteten
elastischen Aufbereitungsschlegeln versehen sind. Gemäß
dem in Figur 9 dargestellten Ausführungsbeispiel bei
dieser Druckschrift werden die beiden Aufbereitungsrotoren
gegensinnig oder gleichsinnig angetrieben, wobei das aufzubereitende Grünfutter durch den zwischen den Aufbereitungsrotoren angeordneten Futterdurchlaß hindurchtritt.
Zur Anpassung an unterschiedliche Futterqualitäten bzw.
Aufbereitungsgrade kann dabei der Achsabstand der beiden
Aufbereitungsrotoren verändert werden. Eine derartige
Verstellung des Achsabstandes zweier Aufbereitungsrotoren
verändert jedoch nur die Tiefe,mit der die Aufbereitungsschlegel in den Futterstrom eindringen. Unterschiedliche Einflüsse von Beschleunigungs-und Verzögerungsarbeiten im Futterstrom können bei einem derartigen Verstellsystem jedoch nicht berücksichtigt werden.

Aufgabe der vorliegenden Erfindung ist es, eine verbesserte Futteraufbereitungsmaschine anzugeben, bei der der Aufbereitungsgrad zwischen geringer Aufbereitung und starker Aufbereitung stufenlos einstellbar ist und bei der die Beschleunigung bzw. die Verzögerung des Futters beim Durchtritt durch den Futternachlaß je nach Futterqualität einstellbar ist, so daß die oben genannten Nachteile vermieden sind.

Ausgehend von einer Futteraufbereitungsmaschine der eingangs näher genannten Art, wird zur Lösung dieser Aufgabe vorgeschlagen, daß an der Vorderseite des unteren Aufbereitungsrotors ein sich im wesentlichen nach oben erstreckendes, den Förderkanal begrenzendes,in einer Ebene senkrecht zu den Achsen der Aufbereitungsrotoren verschwenkbares Leit- und Prallblech vorgesehen wird.

Vorzugsweise ist die Drehachse des Leit- und Prallblechs in seinem unteren Drittel angeordnet; besonders günstig ist es, wenn die Drehachse sich im wesentlichen auf Höhe der Achse des unteren Aufbereitungsrotors befindet und parallel zu ihr verläuft.

Bei einem besonders bevorzugten Ausführungsbeispiel ist das Leit- und Prallblech derart gewölbt, daß eine konkave Seite dem eintretenden Futterstrom zugewandt ist.

Bei der erfindungsgemäßen Futteraufbereitungsmaschine erfolgt durch das schwenkbare Leit- und Prallblech eine Aufbereitung des Futters, die exakt an die Struktur der einzelnen Futterarten angepaßt werden kann. Das Leit- und Prallblech und sein Drehpunkt sind derart ausgebildet, daß der Einlaufspalt zur geringen Aufbereitung an dem ersten Aufbereitungsrotor groß ist, wobei die Wölbung derart ausgerichtet ist, daß der Futterstrom direkt in den Teil zwischen den beiden Aufbereitungsrotoren gelenkt wird. Zur starken Aufbereitung des Futterstromes wird das Leit- und Prallblech derart verschwenkt, daß der Einlaufspalt am ersten Aufbereitungsrotor klein ist und die Wölbung so ausgerichtet ist, daß der Futterstrom nach dem Einlaufspalt den ersten Aufbereitungsrotor wieder verlassen kann und somit vom zweiten Aufbereitungsrotor nochmals umgelenkt und damit beschleunigt wird.

Ferner sind mit der erfindungsgemäßen Futteraufbereitungsmaschine beliebige Zwischenstellungen zwischen den beiden Endstellungen des verschwenkbaren Leit- und Prallblechs möglich um so eine beliebige Aufbereitung an unterschiedlichen Futterarten zu ermöglichen.

Im folgenden wird die Erfindung anhand der Zeichnung näher erläutert, in der ein vorteilhaftes Ausführungsbeispiel dargestellt ist. Es zeigen:

Figur 1    schematisch einen Querschnitt durch eine erfindungsgemäße Aufbereitungsmaschine in ihrer Stellung geringer Aufbereitung und

Figur 2    einen Schnitt durch diese Maschine in ihrer Stellung starker Aufbereitung.

In den Figuren ist mit 1 das fahrbare Gestell der Futteraufbereitungsmaschine angedeutet, wobei die Aufbereitungsmaschine mit einer geeigneten Schneidvorrichtung, z.B. einem Kreiselmäher, verbunden sein kann oder aber auch eine von einem nicht dargestellten Schlepper gezogene, unabhängige Maschine sein kann. Mit 2 ist das geschnittene Grünfutter bezeichnet, das entweder durch eine nicht dargestellte Aufnahmeeinrichtung der Aufbereitungsmaschine zugeführt werden kann, oder aber auch durch den unteren Aufbereitungs-

- 7 -

rotor 3 aufgenommen wird. Dieser untere Aufbereitungsrotor 3 wird drehbar um eine Achse 5 angeordnet, die sich
quer zur Fahrtrichtung der Futteraufbereitungsmaschine erstreckt. Der Aufbereitungsrotor 3 ist ferner mit einer Vielzahl entlang seines Umfangs angeordneten elastischen oder
elastisch befestigten Aufbereitungsschlegeln 7 versehen,
die bei Drehung des Aufbereitungsrotors 3 in den Futterstrom 2 eingreifen.

Mit 4 ist ein zweiter im wesentlichen oberhalb des unteren
Aufbereitungsrotors 3 angeordneter Aufbereitungsrotor bezeichnet, der um eine Achse 6 parallel zur Achse 5 des
unteren Aufbereitungsrotors 3 angeordnet ist und sich ebenfalls quer zur Fahrtrichtung der Aufbereitungsmaschine erstreckt. Auch der zweite Aufbereitungsrotor 4 ist mit einer
Vielzahl von geeigneten entlang seines Umfangs angeordneten
elastischen oder elastisch befestigten Aufbereitungsschlegeln 8 versehen.

Der Abstand der beiden Achsen 5 und 6 voneinander ist vorteilhafterweise gleich oder kleiner als der doppelte
Durchmesser der durch die äußeren Enden der Rotorschlegel
7 und 8 gebildeten Kreise, so daß die Aufbereitungsschlegel
8 in kämmenden Eingriff mit den Aufbereitungsschlegeln 7
gelangen, während die beiden Aufbereitungsrotoren 3 und 4 gegensinnig oder gleichsinnig zueinander angetrieben werden wie es durch die eingezeichneten Pfeile angedeutet ist.

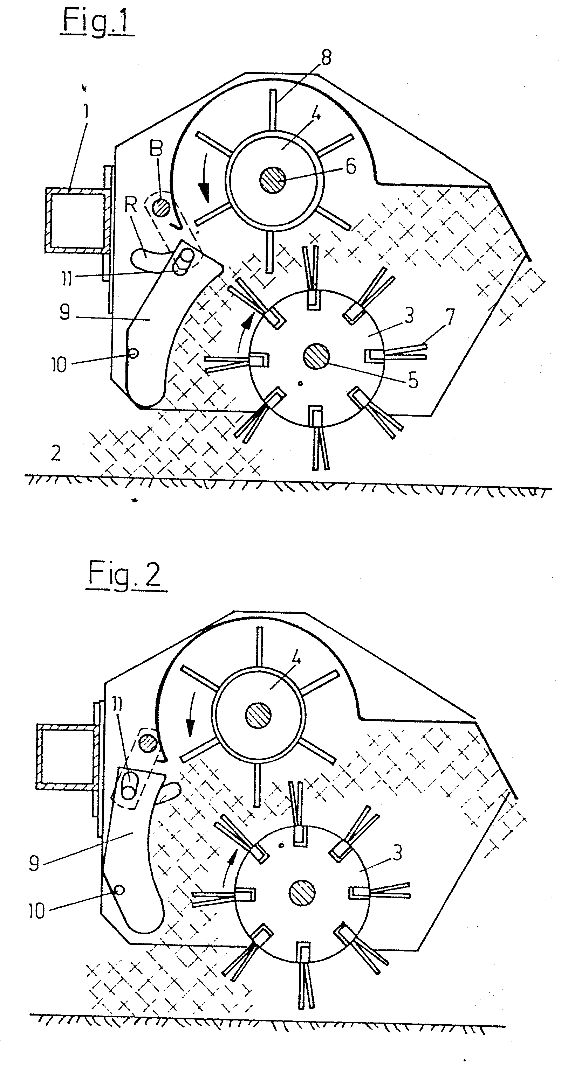

Mit 9 ist ein den Förderraum nahe vor dem unteren Aufbereitungsrotor 3 begrenzendes Leit- und Prallblech bezeichnet, das den Futterstrom 2 in Richtung des Futterdurchlasses zwischen den beiden Aufbereitungsrotoren führt. Das Leit- und Prallblech 9 ist in einer Ebene verschwenkbar, die senkrecht zu den beiden Achsen 5 und 6 der beiden Aufbereitungsrotoren 3 und 4 verläuft. Die Drehachse 10 um die das Leit- und Prallblech 9 verschwenkt werden kann, ist im unteren Drittel des Leit- und Prallblechs angeordnet und im wesentlichen in Höhe der Achse 5 des unteren Aufbereitungsrotors 3. Das Leit- und Prallblech 9 ist ferner gewölbt ausgeführt, wobei die Wölbung in Richtung des Futterstromes 2 zeigt um so eine gute Führung des Futterstromes zu gewährleisten. In Figur 1 ist das Leit- und Prallblech 9 in derjenigen Stellung gezeigt, in der eine geringe Aufbereitung des Futterstromes 2 in der Maschine erfolgt. Zu diesem Zweck ist das Leit- und Prallblech mittels einer Welle 11, die eine Öffnung in dem Leit- und Prallblech durchsetzt, in Richtung des unteren Aufbereitungsrotors 3 bis zu ihrer Endstellung verschwenkt. Zu diesem Zweck ist im Seitengehäuse der Futteraufbereitungsmaschine ein Langloch 12 vorgesehen, in dem entlang die Welle 11 geführt wird. Mit 13 ist die Drehachse eines Hebelarms bezeichnet zur Verschwenkung der Welle 11 und damit des Leit- und Prallblechs 9. In dieser Stellung erfolgt eine geringe Aufbereitung des Futters, da der Futterstrom von dem Aufbereitungsschlegel 7 des unteren Aufbereitungsrotors 3 im wesentlichen zum hinteren Auswurf der Maschine geführt wird, während durch gleichzeitig kämmenden Eingriff des gegensinnig angetriebenen Aufbereitungsrotors 4 eine geringe Beeinflussung des Futterstromes 2 erfolgt.

In Figur 2 ist die Futteraufbereitungsmaschine in derjenigen Stellung gezeigt, in der eine starke Futteraufbereitung erfolgt. Hierbei ist das Prall- und Leitblech 9 um seine Drehachse 10 so weit vom unteren Aufbereitungsrotor 3 entfernt verschwenkt, daß die Führungswelle 11 im Langloch 12 in ihrer in der Figur links gezeigten Endstellung anlangt. Dadurch verbreitert sich nicht nur der in die Maschine eintretende Futterstrom 2, sondern er wird auch durch die Aufbereitungsschlegel 7 des unteren Aufbereitungsrotors 3 bis in den oberen Aufbereitungsrotor 4 geführt, wonach eine Umlenkung und entsprechende Beschleunigung des Futterstromes 2 in Richtung des hinteren Austritts erfolgt. Durch die in entgegengesetzter Richtung wirkende Beschleunigung des Futterstromes und die Umlenkung erfolgt eine starke Aufbereitung des Futters.

Um die eingangs genannte stufenlose Variation des Aufbereitungsgrades unter Berücksichtigung unterschiedlicher
Beschleunigungsarbeiten und Verzögerungsarbeiten im Futterstrom 2 zu erzielen, kann das Leit- und Prallblech 9 zwischen seinen beiden Endstellungen beliebig verschwenkt
und verriegelt werden. Durch diese stufenlose Verschwenkung
des Prall- und Leitbleches 9 in einer Ebene, die sich im
wesentlichen in Fahrtrichtung der Maschine erstreckt, kann
eine stufenlose Anpassung an die unterschiedlichsten Futterarten erfolgen. Gleichzeitig wird noch der Vorteil erzielt, daß bei starker Aufbereitung diese Aufbereitung
an einer größeren Rotoroberfläche erfolgt, so daß mehr
Aufbereitungsschlegel 8 am Aufbereitungsprozeß beteiligt
werden können. Durch die starke Umleitung des Futterstromes 2 in der in Figur 2 gezeigten Stellung der Maschine,
erhält man eine gleichmäßigere starke Aufbereitung des
Futters, wobei durch die Änderung der Halmrichtung im
Futterstrom eine bessere Schwadablage möglich ist.

Mit der erfindungsgemäßen Futteraufbereitungsmaschine
kann also der Bearbeitungsgrad des Futters bei einfachstem Aufbau erheblich besser und stärker variiert
werden, sowie an die einzelnen Futterqualitäten angepaßt werden als es z.B. mit einer Axialverschiebung der beiden Aufbereitungsrotoren zueinander möglich ist.

1 0985 ch

Klöckner-Humboldt-Deutz AG Zweigniederlassung Fahr,

7702 Gottmadingen

Futteraufbereitungsmaschine

P a t e n t a n s p r ü c h e

1. Futteraufbereitungsmaschine, die ein fahrbares Gestell
aufweist, mit einer Aufnahmeeinrichtung für das geschnittene Futter und mit einem Futterdurchlaß sowie
mit zwei Aufbereitungsrotoren, die drehbar und parallel
zueinander um sich quer zur Fahrtrichtung der Maschine
erstreckende Achsen angeordnet sind und die jeweils mit
einer Vielzahl von radial nach außen gerichteten,
elastischen oder elastisch befestigten Aufbereitungsschlegeln versehen sind, dadurch gekennzeichnet, daß an
der Vorderseite des unteren Aufbereitungsrotors (3)
ein sich im wesentlichen nach oben erstreckendes, den
Förderkanal begrenzendes, in einer Ebene senkrecht zu den
Achsen der Aufbereitungsrotoren (3, 4) verschwenkbares
Leit- und Prallblech (9) vorgesehen ist.

-2-

2. Futteraufbereitungsmaschine nach Anspruch 1, dadurch gekennzeichnet, daß die Drehachse (10) des Leit- und Prallblechs (9) in seinem unteren Drittel angeordnet ist.

3. Futteraufbereitungsmaschine nach Ansprüchen 1 und 2, dadurch gekennzeichnet, daß die Drehachse (10) sich im wesentlichen auf der Höhe der Achse (5) des unteren Aufbereitungsrotors (3) befindet und parallel zu ihr verläuft.

4. Futteraufbereitungsmaschine nach Ansprüchen 1 bis 3, dadurch gekennzeichnet, daß das Leit- und Prallblech (9) in Längsrichtung gewölbt ist und daß seine konkave Seite dem Futterstrom zugewandt ist.

-2-

## Fig.1

## Fig.2

**Europäisches Patentamt**

# EUROPÄISCHER RECHERCHENBERICHT

Nummer der Anmeldung

EP 84 10 3660

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-2 089 635 (BUCHER-GUYER) * Seite 3, Zeilen 90-106; Seite 4, Zeilen 26-38; Figuren 2,6; Ansprüche 15-19 * | 1,2,4 | A 01 D 43/10 |
| X | EP-A-0 076 686 (NATIONAL RESEARCH DEVELOPMENT CORPORATION) * Seite 38, Zeilen 10-18; Seite 39, Zeilen 1-15; Figuren 15,16 * | 1,3 | |
| P,X | EP-A-0 100 628 (NATIONAL RESEARCH DEVELOPMENT CORPORATION) * Seite 20, Zeile 17 - Seite 21, Zeile 12; Figur 3 * | 1,3 | |
| D,A | EP-A-0 061 230 (NATIONAL RESEARCH DEVELOPMENT CORPORATION) * Seite 50, Zeile 21 - Seite 52, Zeile 16; Figur 9A * | 1,4 | RECHERCHIERTE SACHGEBIETE (Int. Cl. 3) A 01 D |
| A | EP-A-0 065 416 (NATIONAL RESEARCH DEVELOPMENT CORPORATION) * Seite 47, Zeile 20 - Seite 48, Zeile 3 * | 1 | |

Der vorliegende Recherchenbericht wurde für alle Patentansprüche erstellt

| Recherchenort DEN HAAG | Abschlußdatum der Recherche 13-09-1984 | Prüfer DE LAMEILLIEURE D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82